# EUROPEAN PATENT APPLICATION

(11) **EP 2 555 100 A1**
(43) Date of publication of application: **06.02.2013**
(21) Application number: 11759237.8
(22) Date of filing: 14.03.2011
(51) Int. Cl.: G06F 3/048, G06F 3/14, G09G 5/00, G09G 5/38

(54) **INFORMATION PROCESSING DEVICE, DISPLAY CONTROL METHOD, PROGRAM AND RECORDING MEDIUM**

(30) Priority: 26.03.2010 JP 2010072551
(71) Applicant: NEC Corporation, Tokyo 108-8001 (JP)
(72) Inventor: TAMURA, Norimasa, Tokyo 141-0032 (JP)
(74) Representative: Vossius & Partner
(86) International application number: PCT/JP2011/055913
(87) International publication number: WO 2011/118431

(57) **Abstract**

An aim of the present invention is to provide information processing appratus , display control method, program and computer-readable recording medium to improve the operabilities in accordance with the open/close angle of the device.

An information processing device, wherein that a first housing equipped with a display unit and a second housing joined movably by a joining unit and said display unit includes an input unit which receives an operation input through detection of a contact onto the display unit, comprising:
an angle detection means for detecting an angle formed by said first housing and the second housing;
a storage means for defining an area where it is difficult to operate in the display unit as an access inconvenient area and memorizing the area correspond to the angle; and
a display control means for controlling the display unit considering said access inconvenient area corresponding to said detected angle.

## Description

### TECHNICAL FIELD

The present invention relates to an information processing device, a display control method, a program and a recording medium, and in particular relates to the information processing device, the display control method, the program and the recording medium capable of improving operability in accordance with an open/close angle of the device.

### BACKGROUND ART

A double spread type display device is disclosed (refer to the patent literature 1), where it is consisting of two housings equipped with display unit (i.e. display) on each housing which display images. The display device can display the same layout image of page space as an actual image of newspapers or magazines, and can display an article with readable size by an easy operation based on the image.

### PRIOR ART DOCUMENT

### Patent literature

Patent literature 1: Japanese Patent Application Laid-Open No. 2004-139399

### SUMMARY OF THE INVENTION

### Problem to be Solved by the Invention

The display device disclosed in the above-mentioned patent literature 1 includes an operation button on a rotation shaft (i.e. hinge unit) which is a joining position of two housings. In addition, various operation buttons which are installed in the housing are located close to the rotation shaft.

Here, the device wherein a display unit can be open at free angle is very useful when using it at a limited space such as in a packed train, because it can compactly save an occupation area of a terminal. On the other hand, for this kind of the device, following inconveniences and difficulties are caused concerning operational aspects.
- The more a open/close angle formed by a left display and a right display becomes small, the more it becomes difficult to touch by a fingertip or a stylus pen on buttons located near the hinge unit or icons and buttons or the like located in the display near the hinge unit.
- The more a open/close angle formed by the left display and the right display becomes small, the more it becomes difficult to see icons and buttons in the display due to a limitation of viewing angle of LCDs (Liquid Crystal Display).
- In accordance with an open/close angle formed by the left display and the right display, it becomes difficult to see the icons and the buttons or the like in the display because of a reflection of the opposite display, light of fluorescent lamp or solar light.

Although it should move the icons located at a position where it is difficult to operate on the display, it was also difficult. The reason is because; it is difficult to operate using a pen or the like for the movements. In this manner, there were no degrees of freedom for the buttons which are already installed on the rotation shaft or the like.

The present invention has been made in view of these difficulties, and an aim is to improve the operabilities in accordance with the open/close angle of the device.

### Means for Solving Problem

An information processing device according to the present invention is the information processing devices in that a first housing equipped with a first display unit and a second housing equipped with a second display unit are movably joined by a joining unit and said first display unit and the second display unit respectively includes an input unit which receives an operation input through detection of a contact onto the display unit, and comprising an angle detection means for detecting an angle formed by said first housing and the second housing, a storage means for defining an area where it is difficult to operate in a display unit as an access inconvenient area and memorizing the area corresponding to the angle and a display control means for controlling the display units considering said access inconvenient area corresponding to said detected angle.

A display control method according to the present invention is the display control method for an information processing devices in that a first housing equipped with a first display unit and a second housing equipped with a second display unit are movably joined by a joining unit and said first display unit and the second display unit respectively includes an input unit which receives an operation input through detection of a contact onto the display unit, and characterized by comprising a step of detecting an angle formed by said first housing and the second housing and a step of controlling the display units considering an access inconvenient area corresponding to said detected angle where an operation is difficult in the display units.

The information processing program according to the present invention is the display control programs for an information processing device, wherein that a first housing equipped with a first display unit and a second housing equipped with a second display unit are movably joined by a joining unit and said first display unit and the second display unit respectively includes an input unit which receives an operation input through detection of a contact onto the display unit,
causing a computer to execute:
a process of detecting an angle formed by said first housing and the second housing and a process of controlling the display unitsconsidering an access inconvenient area corresponding to said detected angle where is an area of operational difficulty in the display units.

A recording medium according to the present invention is a computer-readable recording medium for recording processes of the display control program according to the above-mentioned present invention.

### Effect of the Invention

According to the present invention, it can improve operabilities in accordance with the open/close angle of the device.

### BRIEF DESCRIPTION OF THE DRAWINGS

Fig. 1 is an outside view of a spread state of a terminal device 1 according to an exemplary embodiment of the present invention.
Fig. 2 is top views and side views where the terminal device 1 is in a state of open angle of 180 degrees and in a state of open angle of 90 degrees respectively according to the exemplary embodiment of the present invention.
Fig. 3 is an example of display of the terminal device 1 according to another exemplary embodiment of the present invention.
Fig. 4 is a figure showing movement of icons or the like due to tilt of the terminal device 1 according to another exemplary embodiment of the present invention.
Fig. 5 is a figure showing an example of a window display of the terminal device 1 according to another exemplary embodiment of the present invention.
Fig. 6 is a figure showing movement of icons or the like of the terminal device 1 according to another exemplary embodiment of the present invention.
Fig. 7 is a block diagram of a terminal device 100 according to an exemplary embodiment of the present invention.

### BEST MODE FOR CARRYING OUT THE INVENTION

Hereinafter, the exemplary embodiments of the present invention in detail will be described using the drawings. Where, because the exemplary embodiments described as follows are preferred exemplary embodiments of the present invention, although technically desirable various limitations are imposed, as far as there are no specific descriptions that limit the present invention in the following descriptions, the scope of the present invention is not limited to these aspects.

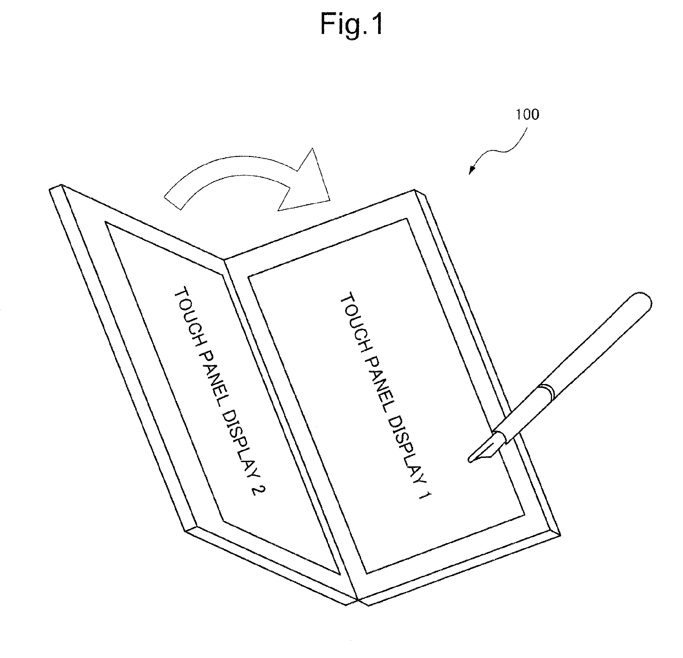

An information processing device according to the exemplary embodiment will be described using a terminal device 100 with double spread type where two housings having a display unit on each of them are rotationally joined. Fig. 1 is the outside view of a spread state of the terminal device 1 according to the exemplary embodiment of the present invention. The display units which is included in the terminal device 1 according to the exemplary embodiment is a device such as a touch panel display and is equipped with an input unit which receives an input by detecting a contact of a finger, a pen or the like.

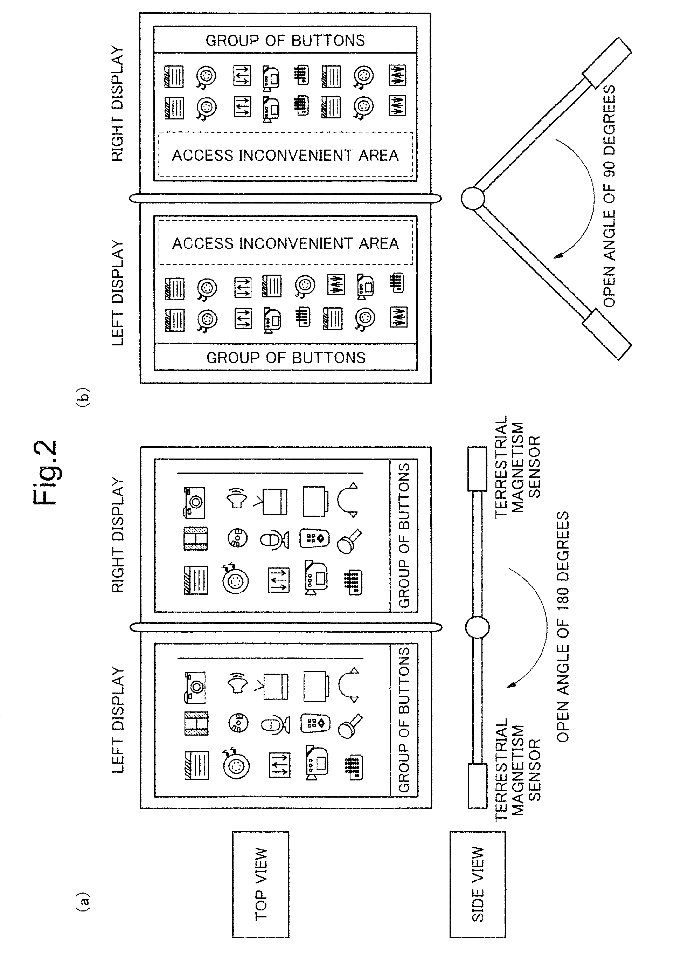

As shown in Fig. 1, the double spread type terminal device 100 has different operabilities in accordance with opening conditions. Hereinafter, it will describe the differences of operabilities using Fig. 2. Fig. 2 is the top views and the side views where the terminal device 1 according to the exemplary embodiment of the present invention is in a state of open angle of 180 degrees and in a state of open angle of 90 degrees respectively. In the state of open angle of 180 degrees, as shown by the top view of Fig. 2 (a), those displays (i.e. right display and left display) installed in individual housing are easy for seeing, and it is easy to operate a group of icons and buttons whichever position in the display unit it locates. Where, the group of buttons is a status bar or the like. Here, in the exemplary embodiment, the group of icons and buttons is used as an example of an object.

On the other hand, in the state of open angle of 90 degrees as shown in Fig. 2 (b), for the displays (i.e. right display and left display) installed in individual housings, it is difficult to operate those that are allocated near to the rotation shaft as the joining unit. In the specification, the operationally difficult area is denoted as "access inconvenient area".

The exemplary embodiment is characterized by judging the access inconvenient area in accordance with the opening state of the terminal device and arranging the group of icons and buttons at a position where it is easy to operate. For example, as shown in Fig. 2 (b), it arranges the icons or the like at outside of the access inconvenient area.

Accordingly, the terminal device 100 has data on the access inconvenient area correspond to the opening states of the terminal device in advance. Concerning the opening state of the terminal device, it can calculate the open angle by installing such as a terrestrial magnetism sensor in individual housing.

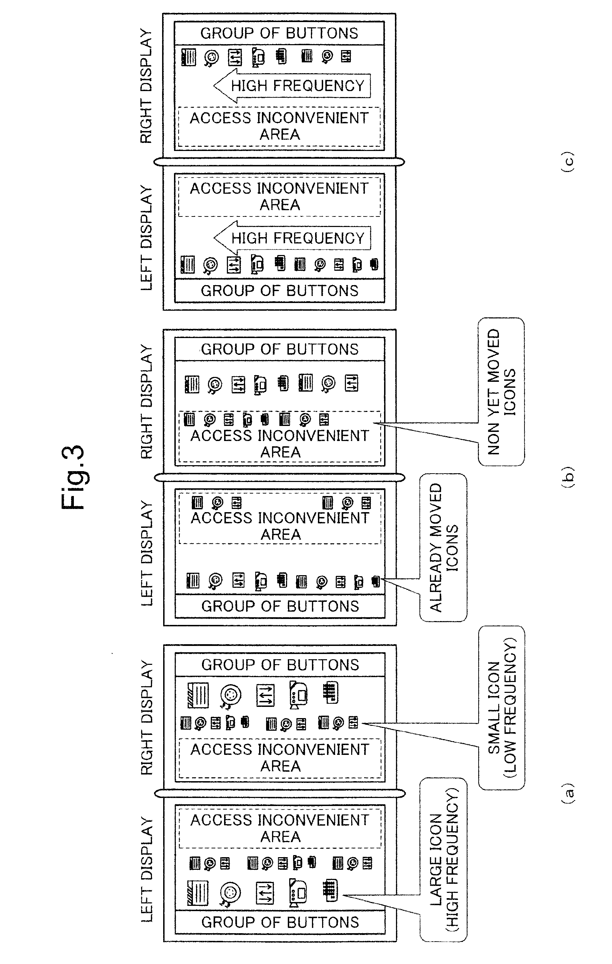

Next, it will describe another exemplary embodiment of the present invention. In the above-mentioned exemplary embodiment, the icons or the like are moved outside of the access inconvenient area (i.e. area where it is easy to access) in accordance with the open/close angle of the terminal device. However, in this case, because an available area for an arrangement of the icons or the like becomes small, in accordance with increase of a number the icons or the like, the available area for the arrangement will be crowded and it becomes difficult to see them. Accordingly, it can consider that, by memorizing a frequency of use (i.e. access count) of the icons or the like, it controls the re-arrangement in accordance with the frequency of use. Hereinafter, it will describe a specific example will be described with reference to Fig. 3. Fig. 3 is the example of display according to another exemplary embodiment of the present invention.

As shown in Fig. 3 (a), the information processing device can control so that size of the icons having higher frequency of use will be expanded and displayed, and size of the icons having lower frequency of use will be reduced and displayed.

As shown in Fig. 3 (b), the information processing device can control so that icons having lower frequency of use will not be moved and it moves only them having higher frequency of use.

As shown in Fig. 3 (c), the information processing device can control so that it will change an order of arrangement of the icons depend on whether it is high or low of the frequency of use.

Further, the frequency of use can be detected by managing the access count of the icons by an internal counter. It defines in advance a size of the icon and a threshold value on whether it moves or not, and executes such as above-mentioned size change in accordance with the access count.

Further, it will describe another exemplary embodiment will be described. The icons or the like are rearranged considering the access inconvenient area in accordance with the open/close angle of the terminal device. In addition, it is needless to say that a user can optionally move them. This is because, depending on the open/close angle, a scope of visible eyesight (i.e. easiness of seeing) of the icons or the like are affected due to allowable viewing angle of the LCD or the reflection from the opposite display, the light of fluorescent lamp and the solar light.

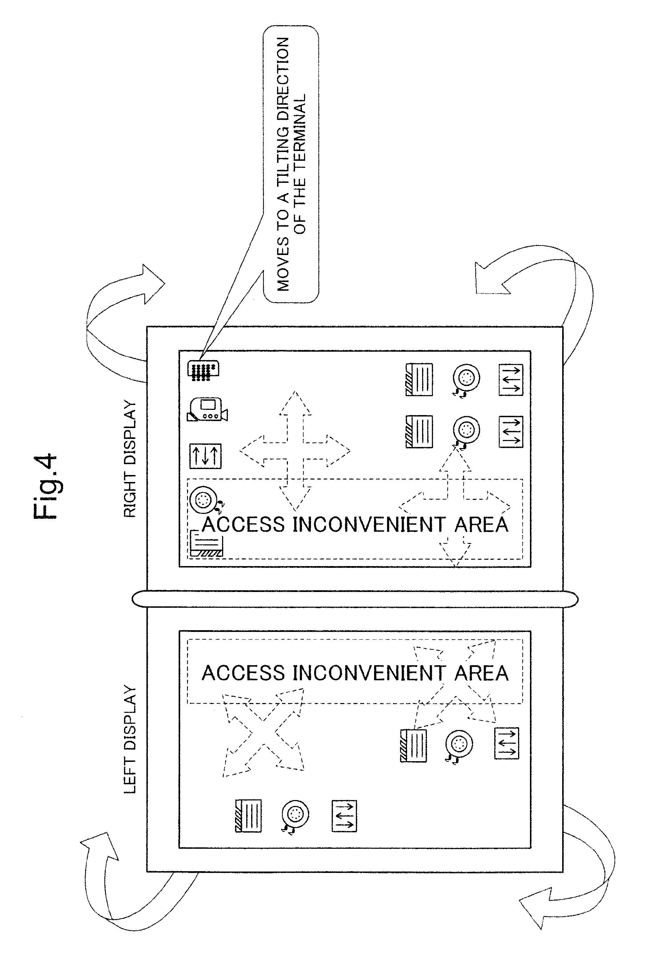

A movement method where a movement of the icons or the like can be done by tilting the terminal device itself can be considered (refer to Fig. 4). The tilt of the terminal device can be detected by a terrestrial magnetism sensor which will be installed in individual housing. Following to the method, whenever the terminal device executes a tilt motion, the icons or the like start the movement. It can terminate the movement when the tilt of the terminal device is returned to a state of a default position (i.e. tilt angle of 0 degree). A moving velocity can be controlled with the tilt angle. The icons or the like can be moved freely not only in a specific display but also across the left display and the right display. The device can also be set so that only designated icons can be moved in accordance with the tilt motion. Conversely, it can set so that those icons which are not to be moved can be specified (e.g. holding them by a finger or the like), and the remaining icons can be moved in accordance with the tilt motion.

According to the above-mentioned exemplary embodiment, it mentioned the group of icons and buttons or the like that are displayed on the display as an example of object which a user operates for the group of icons and buttons or the like that are displayed on the display. Alternatively, also consider function keys or the like can be considered as an example of other objects. The function keys or the like are places where a user operates (i.e. it needs to touch the display) when an application window is displayed. In this case, it is difficult to move the arrangement of the function keys or the like, as the above-mentioned exemplary embodiment where the icons are re-arranged. Therefore, according to the exemplary embodiment, it is characterized by displaying the window outside of the access inconvenient area.

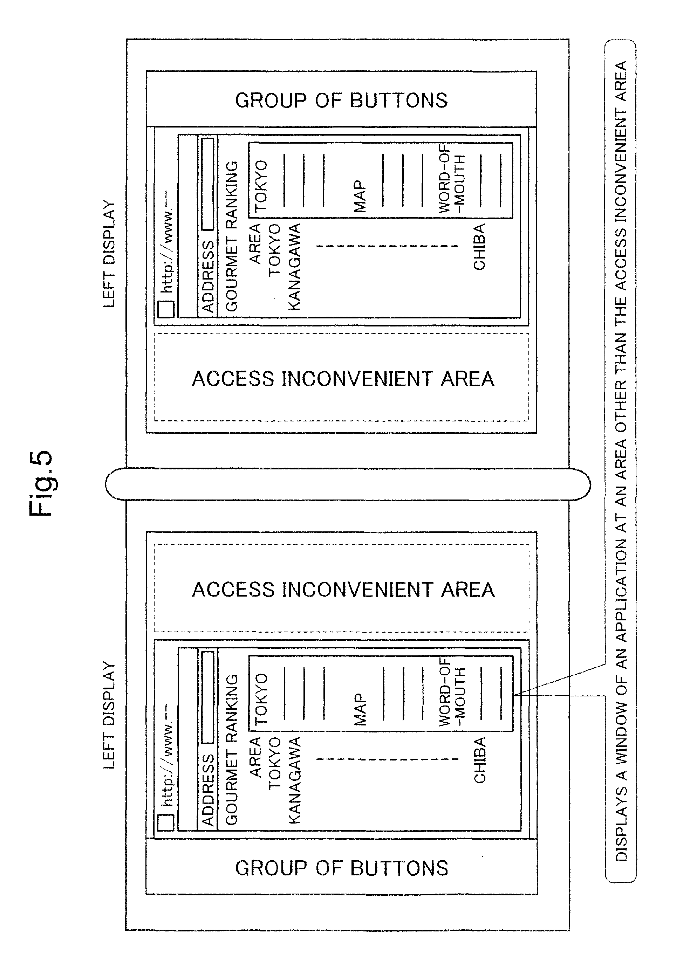

Fig. 5 is the figure showing the example of the window display according to the exemplary embodiment. For example, in the case of the window display as shown in Fig. 5, a user needs to touch using a pen where the position for a selection among regional areas (i.e. area such as Tokyo or Kanagawa), which is places at a left end. In the case that it does not consider the access inconvenient area, because the area selection position in the window which is displayed in the right display will be displayed near to the rotation shaft, it is hard to access when an open angle is small. Therefore, according to the exemplary embodiment, as shown in Fig. 5, the device is characterized by controlling so that the window will be displayed outside of the access inconvenient area in accordance with the open angle.

Further, a decision on whether or not a trigger (e.g. function key or the like) which has a possibility that the user operates is within the window display can be done, and when it is not, the window is displayed without considering the access inconvenient area. As the result, when there are no triggers which the user operates, the display unit is widely utilized as large as possible.

Further, as another exemplary embodiment, it can execute the display control in accordance with a change of direction of use of the terminal device. According to each of above-mentioned exemplary embodiment, although it is used at a state that the terminal device is opened in a direction of from left to right, a case can be also considered that the device is puts on a desk and used as a laptop computer by opening in a direction of from top to bottom. In this case, it can move all icons or the like in the display on the desk side to the other display (here, it may assemble overlapped icons), and display a software keyboard or the like in the display at the desk side and use the other display as a main display. Conversely, it may assemble whole the icons or the like in the display at the desk side. A judgment on which display is at the desk side among two displays that are installed in each of housing of the terminal device can be done using a terrestrial magnetism sensor installed in the terminal device. Further, it can specify in advance a display for use as the desk side. Furthermore, a user can specify at a moment of use a display for use as the desk side.

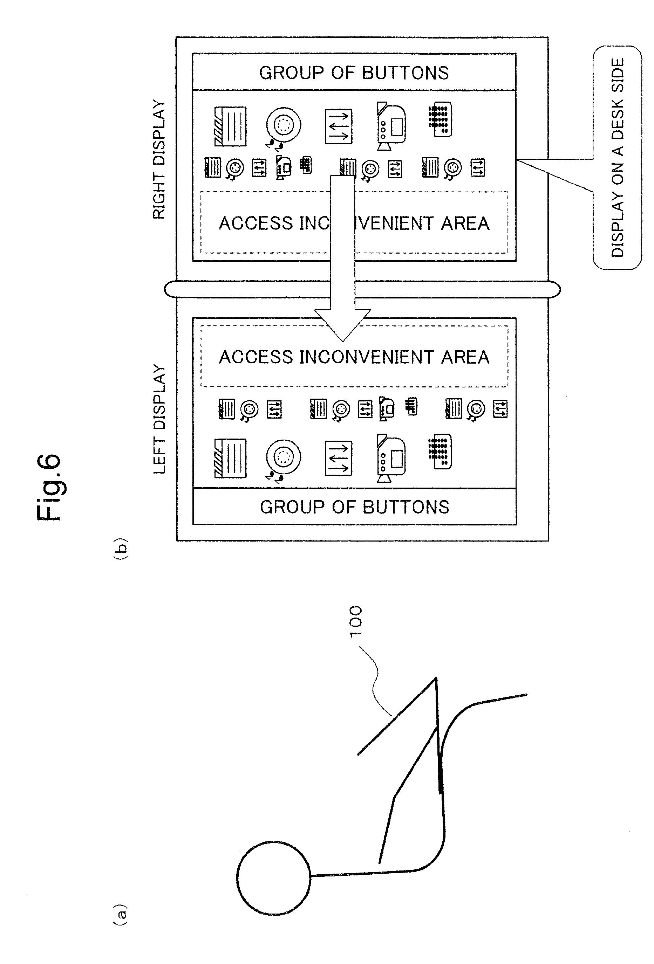

Here, a case that the device will be used as the laptop computer can be occurred not only when a sufficient disk space is available but also for a case when a limited space is available such as in the train. In the case of using the device as the laptop computer at a public place, a narrow space environment is expected. Moreover, a situation can be expected considered where he/she uses the terminal device opening it not too wide worrying that the display will be watched by a third person. As shown in Fig. 6 (a), when using the terminal device 100 with less open it, the access inconvenient area is created. Accordingly, even for the movement of the above-mentioned icons or the like in the case of using it while opening the device in a direction of from top to bottom as the laptop computer, it can arrange the above-mentioned icons or the like at a position other than the access inconvenient area as shown in Fig. 6 (b).

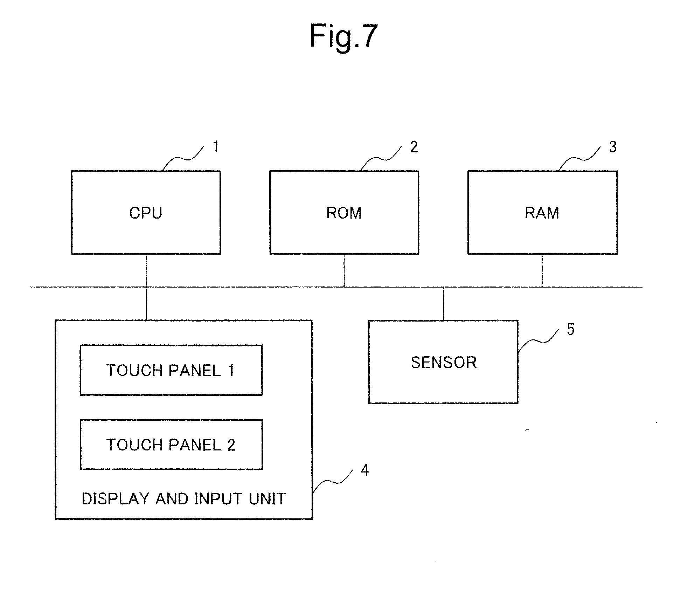

Fig. 7 is the block diagram of the terminal device 100 according to the exemplary embodiment of the present invention. It can be realized by the information processing device which includes a CPU (Central Processing Unit) 1, a ROM (Read Only Memory) 2, a RAM (Random Access Memory) 3, a display and input unit 4 and a sensor 5.

Although the display and input unit 4 includes the display unit and the input unit, because the device is a united configuration of such as a touch panel type display, it denotes the display and input unit.

The sensor 5 is a detection means and detects the opening state (i.e. angle formed by the housings) of the terminal device. According to the exemplary embodiment as shown in Fig. 1, it installs the terrestrial magnetism sensor in individual housing, detects an angle of individual housing, and calculates the angle formed by the housings from their difference. A judgment of the inconvenient area is a sufficient specification for the detection means.

The CPU 1 cooperates with the ROM 2 and the RAM 3, and controls the entire terminal device 100. The ROM 2 stores in advance a control program and various application programs or the like of the terminal device 100. The CPU 1 controls each function block based on the control program stored in the ROM 2. In addition, it executes a start/finish and control or the like of various application programs stored in the ROM 2.

The CPU 1 readouts the programs stored in the recording medium such as the ROM 2 and the RAM 3 and executes them. By the execution of the programs, the CPU 1 logically has a display control means which controls data shown on the display unit. The display control, including the relocation of the icons described in each above-mentioned exemplary embodiment, is executed by the display control means.

The corresponding data between the opening state (i.e. angle formed by the housings) and the inconvenient area of the terminal device are stored in the memory (the ROM 2 and the RAM 3) in advance. The user can optionally change the setting.

Further, the programs according to the present invention are composed of the programs for the CPU to execute the process shown in the flowchart in each figure.

A semiconductor memory unit or an optical and/or magnetic memory unit or the like can be used as a recording medium for recording the programs. By using these programs and the recording media at a system with a configuration different from above-mentioned each exemplary embodiment and executing the above-mentioned programs by its CPU, it can substantially get the same effect as the present invention.

While having described the present invention referring to preferred embodiments, the present invention is not limited to the above mentioned embodiments, and it is to be understood that various changes can be made within the scope of the application of the present invention.

Further, this application claims priority from Japanese Patent Application No. 2010-072551, filed on March 26th, 2010, the contents of which are incorporated herein by the reference in their entirety.

### DESCRIPTION OF THE CODES

- 1: CPU
- 2: ROM
- 3: RAM
- 4: display and input unit
- 5: sensor
- 100: terminal device

## Claims

1. An information processing device, wherein a first housing equipped with a display unit and a second housing are movably joined by a joining unit and the display unit includes an input unit which receives an operation input through detection of a contact onto the display unit, comprising:
an angle detection means for detecting an angle formed by said first housing and the second housing;
a storage means for defining an area where it is difficult to operate in the display unit as an access inconvenient area and memorizing the area correspond to the angle; and
a display control means for controlling the display unit considering said access inconvenient area corresponding to said detected angle.

2. The display control means described in claim 1 moves an object located in said access inconvenient area to outside of said access inconvenient area and displays the object.

3. The information processing device according to claims 1 or 2, further comprising:
a frequency detection means for counting a frequency of access to said object, in that said display control means displays said object in accordance with said frequency of access.

4. The display control means described in claim 3 displays a object with higher frequency of access bigger than a object with lower frequency of access.

5. The display control means described in claim 3 arranges objects sequentially with descending order of frequency of access and displays them.

6. The display control means described in claim 3 displays at outside of said access inconvenient area only object of which frequency of access is high.

7. The information processing device according to any one of claims 1 to 6, further comprising:
a tilt detection means for detecting tilt of said information processing device, wherein said display control means moves said object in accordance with said tilt.

8. A display control method comprising;
detecting an angle formed by a first housing equipped with a display unit and a second housing joined to the first housing movably by a joining unit;
controlling the display unit which include input unit which receive an operation input through detection of a contact onto the display unit considering an access inconvenient area corresponding to said detected angle where is an area of operational difficulty in the display units.

9. An information processing program causing an device, which comprises a first housing equipped with a display unit and a second housing which is joined to the first housing by a joining unit, to execute:
detecting an angle formed by said first housing and the second housing; and
controlling the display unit which includes input unit which receives an operation input through detection of a contact onto the display unit considering an access inconvenient area corresponding to said detected angle where is an area of operational difficulty in the display unit.

10. A computer-readable recording medium in that recording processes of the information processing program according to claim 9.
